# EUROPEAN PATENT SPECIFICATION

(11) **EP 4 238 858 B1**
(45) Date of publication and mention of the grant of the patent: **14.10.2026**
(21) Application number: 22836377.6
(22) Date of filing: 14.04.2022
(51) Int. Cl.: B62K 15/00, B62K 3/00

(54) **FOLDING ELECTRIC SCOOTER**
ZUSAMMENKLAPPBARES ELEKTROFAHRZEUG
TROTTINETTE ÉLECTRIQUE PLIANTE

(30) Priority: 06.01.2022 CN 202210012877
(43) Date of publication of application: 06.09.2023
(73) Proprietor: WU, Jianbin, Dongguan City, Guangdong 523835 (CN)
(72) Inventor: WU, Jianbin, Dongguan City, Guangdong 523835 (CN)
(74) Representative: HGF
(86) International application number: PCT/CN2022/086786
(87) International publication number: WO 2023/130604

(56) References cited:
- WO-A2-2014/080412
- CN-A- 108 357 611
- CN-A- 114 132 420
- CN-U- 202 608 994
- CN-U- 206 049 925
- CN-U- 207 311 727
- CN-U- 209 833 870
- KR-B1- 101 660 466
- US-A1- 2016 009 332

## Description

### TECHNICAL FIELD

The present disclosure relates to the field of foldable electric scooters.

### BACKGROUND

As the green travel concept has been advocated, an increasing number of people choose to travel by public transport. As the city grows in size, there are often several kilometers away from the subway station to the home, hence people require a scooter for short-range travel. A foldable electric scooter has the characteristics of small size, light weight and portability, and it may be the best choice of a scooter for short-range travel. Although the current electric scooter is relatively light and foldable, the efficiency and pattern of folding the electric scooter are still unsatisfying. Especially for the folding pattern, the whole body of the electric scooter generally needs to be laid down and then folded, which causes great inconvenience to operate in a crowded environment and is not applicable to the circumstance where people are getting on and off against time in the public transport. To fold the electric scooter quickly and conveniently in order to adapt to various circumstances, it is necessary to bring improvements to one or more parts and foldable mechanisms accordingly.

Korean patent publication KR20160046425A discloses the features of the preamble of claim 1. In summary, a carrier type foldable kick board, the kick scooter includes: a foot support; a steering wheel; and front and rear wheels. The kick scooter can be folded to be easily carried and stored. The kick scooter additionally includes a foot support folding means which can be used to fold the foot support. The front and rear wheels are arranged to be spaced apart from each other and be in parallel while taking left and right sides of a single virtual line. When the front and rear wheels come in contact with the ground after the foot support and steering wheel are folded, headlight and taillight units also come in contact with the ground at the same time, thereby making the kick scooter to come in contact with the ground in four points. Accordingly, the kick scooter can maintain a reliable upright position without falling to a side even without a rider to hold a handle thereon.

Chinese patent publication CN206049925U discloses a portable scooter, it includes a horizontally arranged front support board, a steering pole connected to the front end of front support, a snap-fit means at the top of steering pole, a telescope pipe movably connected to the top of the snap-fit means, a locating lever provided on the bottom of the telescope pipe, a folding handlebar hand respectively on the both sides wall of the telescope pipe, a front wheel provided at the front end of the steering pole, a rear support board horizontally arranged at the rear end of the front support board, a rear wheel provided at the rear end of the rear support board, and a steel board connected with a side wall of the front support board.

Chinese patent publication CN207311727U discloses a foldable scooter with a foldable pole, including an automobile body, electronic module, and wheels, the electronic module is installed on the automobile body, the automobile body includes footboard, pole, handle, the footboard includes a first footboard and with first footboard carries out the second footboard of foldable connection, the pole with the footboard is foldable connection, the pole includes an upright pole.

### SUMMARY

In order to overcome a drawback described above of the prior art, it is an object of the present disclosure to provide a foldable electric scooter, which aims to solve a problem of the prior art.

In order to achieve an object of the present disclosure, a technical solution adopted is as follows:
the foldable electric scooter includes:
a handlebar assembly, a steering pole assembly, a footboard assembly, a driving device and a wheel assembly; wherein,
the handlebar assembly is connected to one end of the steering pole assembly, the wheel assembly includes a front wheel component provided on the other end of the steering pole assembly and a rear wheel component connected to the footboard assembly, and the driving device is employed for driving the wheel assembly to rotate;
wherein the handlebar assembly includes a handlebar head component and a handle component, and a first folding component is provided between the handlebar head component and the handle component;
wherein the steering pole assembly includes a handlebar connecting part, a wheel connecting part and an intermediate connecting part, a second folding component is provided between the handlebar connecting part and the intermediate connecting part, and is also provided between the intermediate connecting part and the wheel connecting part; and
wherein the footboard assembly includes a front footboard support and a rear footboard support, and a third folding component is provided between the front footboard support and the rear footboard support;
wherein the third folding component includes a front foldable chassis provided on the front footboard support, a rear foldable chassis provided on the rear footboard support, and a locking arrangement; one end of the front foldable chassis is hinged to an end of the rear foldable chassis, and the other end of the front foldable chassis is fixed to the rear foldable chassis by the locking arrangement; and
wherein the locking arrangement comprises a footboard locking base, a first locking plate and a second locking plate; the footboard locking base and the first locking plate are hinged to the second locking plate respectively, the rear foldable chassis is provided with a recess fitting with the first locking plate, the second locking plate is provided with a locking snap-fit component capable of moving relative to the second locking plate, and the footboard locking base is provided with a snapping part that is engaged with the locking snap-fit component such that the first locking plate is fastened into the recess.

Optionally, the first folding component includes a first hinged bar with one end hinged to the handlebar head component, and with the other end connected to the handle component, and the first hinged bar is sleeved with a sliding sleeve 1032 capable of sliding relative to the first hinged bar.

Optionally, the second folding component includes a steering pole folding base provided on the intermediate connecting part, a steering pole folding clasp provided on the handlebar connecting part and the wheel connecting part, and a locking mechanism, a side of the steering pole folding base is hinged to a side of the steering pole folding clasp, and the locking mechanism is employed for fixing the other side of the steering pole folding base to the other side of the steering pole folding clasp.

Optionally, a folding between the intermediate connecting part and the wheel connection part is in a direction toward the footboard assembly, and a folding between the handlebar connecting part and the intermediate connecting part is in a direction toward a side surface of the front wheel component.

Optionally, a first elastic member is provided between the locking snap-fit component and the second locking plate; and the locking snap-fit component is moved relative to the second locking plate so as to be separated from the snapping part and stress the first elastic member to be in a compressed state.

Optionally, a limiting member is provided on the front foldable chassis and is in sliding fit with the front foldable chassis, one end of the limiting member abuts against a hinged joint of the rear foldable chassis and the front foldable chassis, a limiting hole is formed on the rear foldable chassis, and the rear foldable chassis and the front foldable chassis are in an opening state so that the limiting member is accommodated to the limiting hole.

Optionally, the limiting member includes a limiting pin slidably arranged in the front foldable chassis, and a limiting sleeve arranged on the front foldable chassis, the limiting pin and the limiting sleeve are in sliding fit and form a limiting groove having a variable space, and a second elastic member is provided in the limiting groove.

Optionally, the footboard assembly further comprises a front footboard body and a rear footboard body, the front footboard body and the rear footboard body are connected in an articulated manner, the front footboard body is connected to the front footboard support, and the rear footboard body is positioned correspondingly to the rear footboard support.

Compared to the prior art, an advantageous effect of the present disclosure are as follows:
The foldable electric scooter provided by the present disclosure is provided with a plurality of folding assemblies, which may effectively reduce the space occupied by the electric scooter after being folded. The foldable electric scooter has a rational design, good portability and can be easily folded.

### BRIEF DESCRIPTION OF DRAWINGS

In order to more clearly illustrate the technical solutions of some embodiments of the present disclosure, the following will briefly introduce the drawings that are utilized in the description of some embodiments. It is obvious that the drawings described below will explain some embodiments of the present disclosure. Those skilled in the art may obtain other drawings according to these drawings without any inventive effort.
Fig. 1 is a structural schematic diagram illustrating a foldable electric scooter in an unfolded state of the present disclosure.
Fig. 2 is a structural schematic diagram of a first folding component according to the present disclosure.
Fig. 3 is a structural schematic diagram of a second folding component according to the present disclosure.
Fig. 4 is a structural schematic diagram of a third folding component according to the present disclosure.
Fig. 5 is a structural schematic diagram of a third folding component from another perspective view according to the present disclosure.
Fig. 6 is a sectional view of a limiting member according to the present disclosure.
Fig. 7 is a structural schematic diagram of a hinged part according to the present disclosure.
Fig. 8 is a structural schematic diagram illustrating the foldable electric scooter in a first folded state of the present disclosure.
Fig. 9 is a structural schematic diagram illustrating the foldable electric scooter in a second folded state of the present disclosure.
Fig. 10 is a structural schematic diagram illustrating the foldable electric scooter in a third folded state of the present disclosure.

### List of reference characters:

1 - handlebar assembly
101 - handlebar head component
102 - handle component
103 - first folding component
1031 - first hinged bar
1032 - sliding sleeve
2 - steering pole assembly
201 - handlebar connecting part
202 - wheel connecting part
203 - intermediate connecting part
204 - second folding component
2041 - steering pole folding base
2042 - steering pole folding clasp
2043 - pulling component
2044 - movable snap component
2045 - fixed snap component
3 - footboard assembly
301 - front footboard support
302 - rear footboard support
303 - third folding component
3031 - front foldable chassis
3032 - rear foldable chassis
3033 - footboard locking base
3034 - first locking plate
3035 - second locking plate
3036 - recess
3037 - locking snap-fit component
3038 - snapping part
3039 - locking snap
304 - front footboard body
305 - rear footboard body
306 - hinged part
307 - fixed part
308 - fastening hole
309 - fastening member
310 - limiting hole
311 - limiting pin
312 - limiting sleeve
313 - limiting groove
314 - second elastic member
4 - driving device
5 - wheel assembly
501 - front wheel component
502 - rear wheel component

### DETAILED DESCRIPTION OF EMBODIMENTS

For a clearer understanding of the technical problems to be solved, the technical solutions to be utilized and the technical effects to be achieved by the present disclosure, a further detailed description of embodiments of the present disclosure will be presented below. It will be apparent that the specific embodiments described are only some of the embodiments of the present disclosure and shall not be treated as being exhaustive. Based on the embodiments of the present disclosure, all other embodiments obtained by a person skilled in the art without inventive effort fall within the scope of the present disclosure.

In the present disclosure, unless otherwise expressly specified or defined, the expression of a first feature is "above" or "below" a second feature may include that the first feature and the second feature are in direct contact, and may also include that the first feature and the second feature are not in direct contact but are in contact through additional features between them. Furthermore, the expression of the first feature is "over", "above" or "on" the second feature includes that the first feature is directly above and obliquely above the second feature, or merely indicates that the first feature is higher than the second feature in height. And the expression of the first feature is "under", "below" or "beneath" the second feature includes that the first feature is directly beneath and obliquely beneath the second feature, or merely indicates that the first feature is lower than the second feature in height.

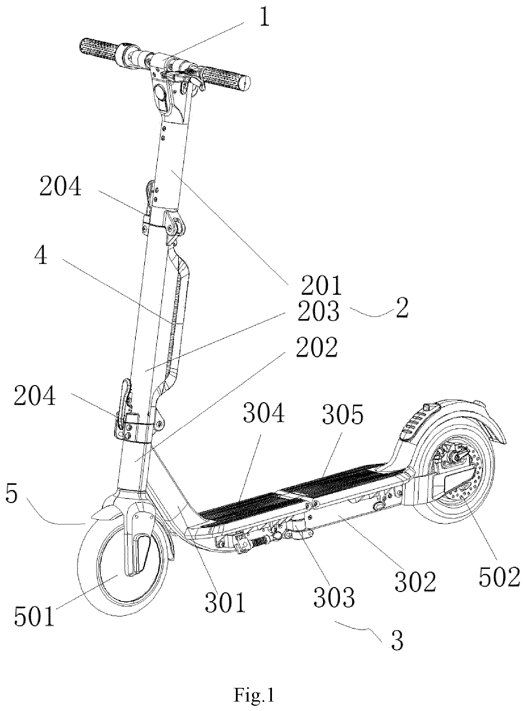

Referring to Figs. 1 to 7, an embodiment of the present disclosure provides a foldable electric scooter that includes
a handlebar assembly 1, a steering pole assembly 2, a footboard assembly 3, a driving device 4, and a wheel assembly 5.

The wheel assembly 5 includes a front wheel component 501 connected to the steering pole assembly 2 and a rear wheel component 502 connected to the footboard assembly 3.

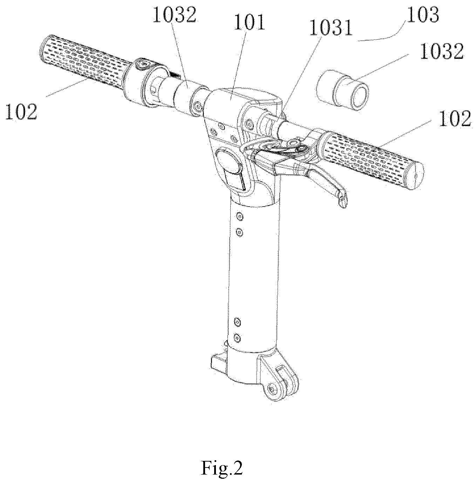

In an embodiment of the present disclosure, specifically, referring to Fig. 2, the handlebar assembly 1 includes a handlebar head component 101 and handle components 102. The handle components 102 are arranged at both sides of the handlebar head component 101. A first folding component 103 is provided between the handlebar head component 101 and each of the handle components 102. The first folding component 103 includes a first hinged bar 1031 hinged to the handlebar head component 101 at one end, the handle component 102 is connected to the other end of the first hinged bar 1031, and the first hinged bar 1031 is sleeved with a sliding sleeve 1032 capable of sliding relative to the first hinged bar 1031.

The handlebar assembly 1 may achieve a folding function, and the specific principle is as follows:
The sliding sleeve 1032 is moved away from a hinged joint of the handlebar head component 101 and the handle component 102, and the handle components 102 at both sides of the handlebar head component 101 are folded close to each other by the hinged structure of the first hinged bar 1031.

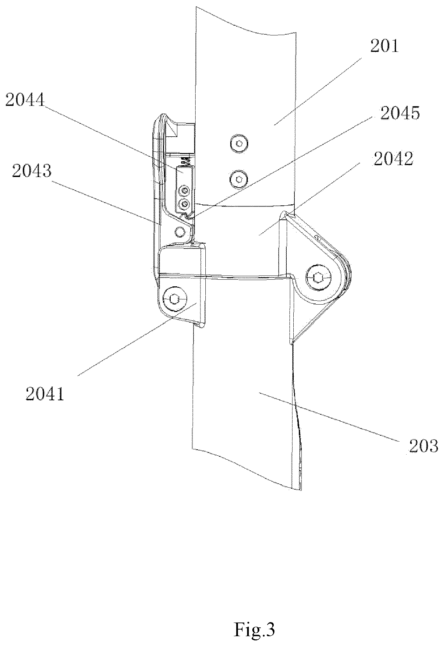

With reference to Figs. 1 and 3, the steering pole assembly 2 includes a handlebar connecting part 201, a wheel connecting part 202 and an intermediate connecting part 203, a second folding component 204 is provided between the handlebar connecting part 201 and the intermediate connecting part 203 and is also provided between the intermediate connecting part 203 and the wheel connecting part 202. The second folding component 204 includes a steering pole folding base 2041 provided on the intermediate connecting part 203, a steering pole folding clasp 2042 provided on the handlebar connecting part 201 and the wheel connecting part 202, and a locking mechanism, wherein a side of the intermediate connecting part 203 is hinged to a side of the steering pole folding clasp 2042, and the locking mechanism is employed for fixing the other side of the intermediate connecting part 203 to the other side of the steering pole folding clasp 2042. Specifically, the locking mechanism includes a pulling component 2043 provided with a movable snap component 2044 in sliding fit with the pulling component 2043, a spring member is provided between the movable snap component 2044 and the pulling component 2043, and a fixed snap component 2045 is provided at an engaged position of the handlebar connecting part 201 and the intermediate connecting part 203 as well as an engaged position of the wheel connecting part 202 and the intermediate connecting part 203.

In an embodiment of the present disclosure, specifically, a folding between the intermediate connecting part 203 and the wheel connecting part 202 is in a direction toward the footboard assembly 3, and a folding between the handlebar connecting part 201 and the intermediate connecting part 203 is in a direction toward a side surface of the front wheel component 501.

The steering pole assembly 2 may achieve a folding function, and the specific principle is as follows:
Both the handlebar connecting part 201 and the wheel connecting part 202 may be folded with respect to the intermediate connecting part 203, respectively, to achieve a double folding of the steering pole assembly 2. The movable snap component 2044 is adjusted to be separated from the fixed snap component 2045 and then the pulling component 2043 is shifted to move the movable snap component 2044 away from the fixed snap component 2045, so that the locking mechanism is unlocked, and the engaged position of the handlebar connecting part 201 and the intermediate connecting part 203, as well as the engaged position of the wheel connection part 202 and the intermediate connecting part 203 may be opened to achieve the folding effect. The folding direction between the intermediate connecting part 203 and the wheel connection part 202 is different from the folding direction between the handlebar connecting part 201 and the intermediate connecting part 203, so that the steering pole assembly 2 may be better folded without interfering with the footboard assembly 3, and may be better accommodated.

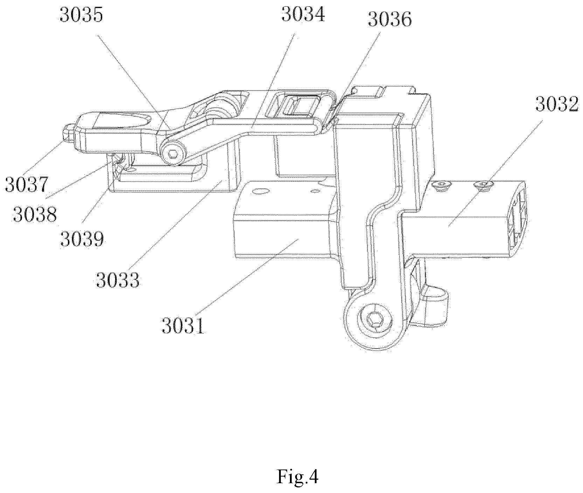

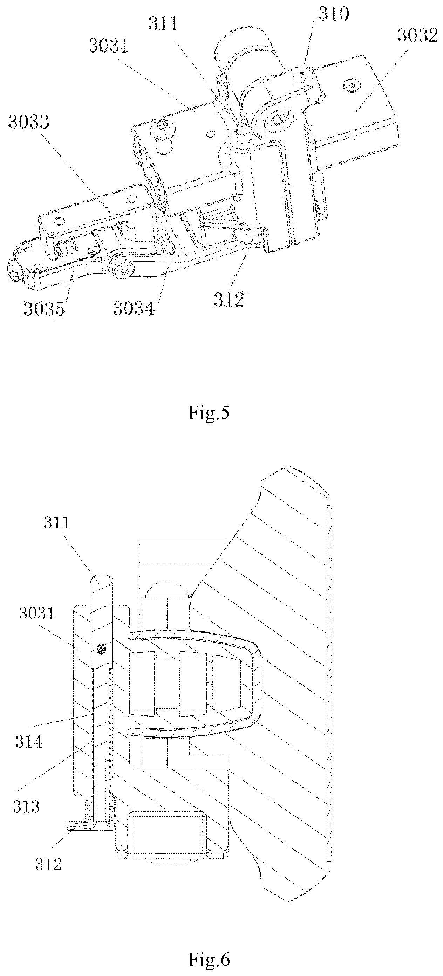

In an embodiment of the present disclosure, with reference to Figs 4 and 5, the footboard assembly 3 includes a front footboard support 301 and a rear footboard support302, and a third folding component 303 is provided between the front footboard support 301 and the rear footboard support302. The third folding component 303 includes a front foldable chassis 3031 provided on the front footboard support301, a rear foldable chassis 3032 provided on the rear footboard support 302 and a locking arrangement, wherein an end of the front foldable chassis 3031 is hinged to an end of the rear foldable chassis 3032, and the other end of the front foldable chassis 3031 and the rear foldable chassis 3032 are fixed by the locking arrangement. The locking arrangement includes a footboard locking base 3033, a first locking plate 3034 and a second locking plate 3035; the footboard locking base 3033 and the first locking plate 3034 are hinged to the second locking plate 3035 respectively. The rear foldable chassis 3032 is provided with a recess 3036 fitting with the first locking plate 3034 The second locking plate 3035 is provided with a locking snap-fit component 3037 capable of moving relative to the second locking plate 3035, and the footboard locking base 3033 is provided with a snapping part 3038 that is engaged with the locking snap-fit component 3037 such that the first locking plate 3034 may be fastened into the recess 3036. A first elastic member is provided between the locking snap-fit component 3037 and the second locking plate 3035, and the locking snap-fit component 3037 may be moved relative to the second locking plate 3035 so as to be separated from the snapping part 3038 and stress the first elastic member to be in a compressed state. Specifically, the second locking plate 3035 is provided with a sliding slot where the locking snap-fit component 3037 is arranged, the locking snap-fit component 3037 is in sliding fit with the sliding slot, and the first elastic member is provided between the sliding slot and the locking snap-fit component 3037, the locking snap-fit component 3037 includes a sliding part being in sliding fit with the sliding slot and a locking snap 3039 being in connection with the sliding part and in snap-fit with the snapping part 3038.

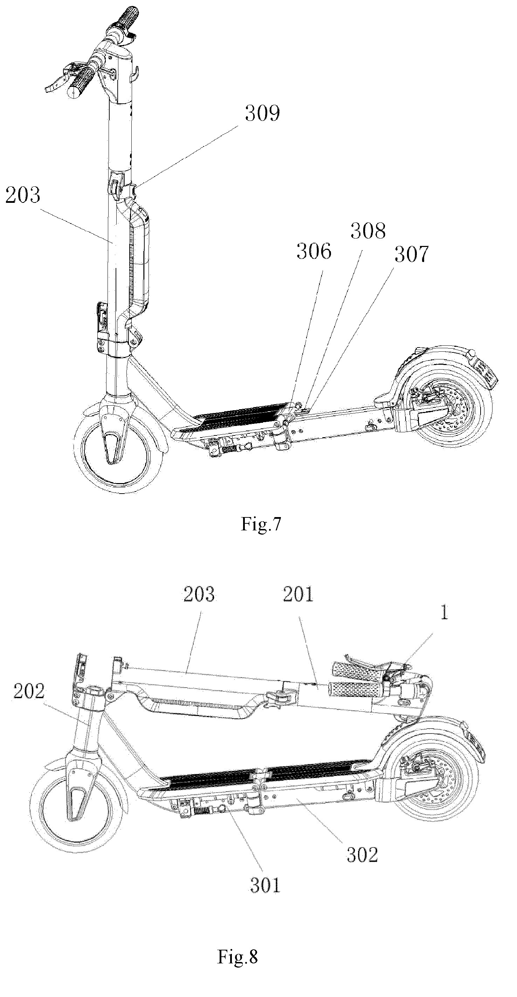

With reference to Fig. 1 and 7, the footboard assembly 3 further includes a front footboard body 304 and a rear footboard body 305, wherein the front footboard body 304 and the rear footboard body 305 are connected in an articulated manner, the front footboard body 304 is connected to the front footboard support301, and the rear footboard body 305 is positioned correspondingly to the rear footboard support 302. Specifically, a hinged part 306 is provided between the front footboard body 304 and the rear footboard body 305 to hinge the both, and a fixed part 307 is provided on the hinged part 306, wherein a fastening hole 308 is formed on the fixed part 307, a fastening member 309 is provided on the intermediate connecting part 203, and a hook-shaped element capable of fitting with the fastening hole 308 is provided on the fastening member 309.

The footboard assembly 3 may also achieve a folding function, and the specific principle is as follows:
Firstly, the front footboard support 301 and the rear footboard support 302 are folded in such a manner:
The locking snap 3039 and the snapping part 3038 are separated from each other by forcing the sliding part of the locking snap-fit component 3037 to slide in the sliding slot of the second locking plate 3035, and then the first locking plate 3034 is rotated relative to the second locking plate 3035 so that the first locking plate 3034 is separated from the recess 3036 on the rear foldable chassis 3032, and the engaged position of the front foldable chassis 3031 and the rear foldable chassis 3032 are hereby opened so that the front footboard support 301 and the rear footboard support 302 are folded close to each other and the folding is done. Since the first locking plate 3034 and the second locking plate 3035 are hinged to each other, the second locking plate 3035 is rotated relative to the footboard locking base 3033 while the first locking plate 3034 is rotated, so that the locking snap-fit component 3037 of the second locking plate 3035 is moved away from the footboard locking base 3033, thereby improving the convenience of operation.

Further, the front footboard body 304 and the rear footboard body 305 are folded in such a manner:
The front footboard body 304 and the rear footboard body 305 are folded close to each other by the hinged part 306 provided between the front footboard body 304 and the rear footboard body 305. Referring to Fig. 7, in order to ensure the stability of the folded state of the foldable electric scooter, after the front footboard body 304 and the rear footboard body 305 are folded together and the steering pole assembly 2 is folded, the fastening member 309 on the intermediate connecting part 203 is close to the fixed part 307 on the hinged part 306 and the fastening member 309 is engaged with the fastening hole 308, so that the intermediate connecting part 203 and the front footboard body 304 are fixed to each other, thereby achieving the stability of the folded state of the whole foldable electric scooter.

Referring to Figs. 5 and 6, a limiting member may be employed to solve the problem as to how the front footboard support 301 and the rear footboard support 302 remain fixed to each other after being folded. Specifically, the limiting member is provided on the front foldable chassis 3031 and is in sliding fit with the front foldable chassis 3031, and one end of the limiting member abuts against a hinged joint of the rear foldable chassis 3032 and the front foldable chassis 3031. A limiting hole 310 is formed on the rear foldable chassis 3032, and the rear foldable chassis 3032 and the front foldable chassis 3031 are in an opening state so that the limiting member is inserted into the limiting hole 310. Specifically, the limiting member includes a limiting pin 311 slidably arranged in the front foldable chassis 3031 and a limiting sleeve 312 arranged on the limiting pin 311, wherein the limiting pin 311 and the limiting sleeve 312 are in sliding fit and form a limiting groove 313 having a variable space, and a second elastic member 314 is provided in the limiting groove 313.

While the second elastic member 314 is in an original state, one end of the limiting pin 311 protrudes outward from the front foldable chassis 3031 and abuts against the hinged joint of the rear foldable chassis 3032 and the front foldable chassis 3031. When a folding is done between the front footboard support 301 and the rear footboard support 302, the rear foldable chassis 3032 acts on the limiting pin 311 so that the limiting member is forced to slide in the front foldable chassis 3031, and the second elastic member 314 is hereby in a compressed state. After the folding is done between the rear foldable chassis 3032 and the front foldable chassis 3031, the limiting hole 310 on the rear foldable chassis 3032 is positioned correspondingly to the limiting pin 311. The limiting pin 311 is restored to its original position and inserted into the limiting hole 310 due to the elastic force of the second elastic member 314, therefore the front footboard support 301 and the rear footboard support 302 may be in secured positions relative to each other after being folded.

In an embodiment of the present disclosure, the driving device 4 includes a power supply and a driving motor powered by the power supply to drive the wheel assembly 5 to rotate. The power supply may be provided at the intermediate connecting part 203.

It should be noted that the first elastic member and the second elastic member 314 may each be a spring.

In an embodiment of the present disclosure, there may be three specific folded states of the foldable electric scooter.

Fig. 8 shows a first folded state: the intermediate connecting part 203 and the wheel connecting part 202 are in a folded state, the handlebar assembly 1 is in a folded state, and the handlebar assembly 1 rests on the rear wheel member 502;

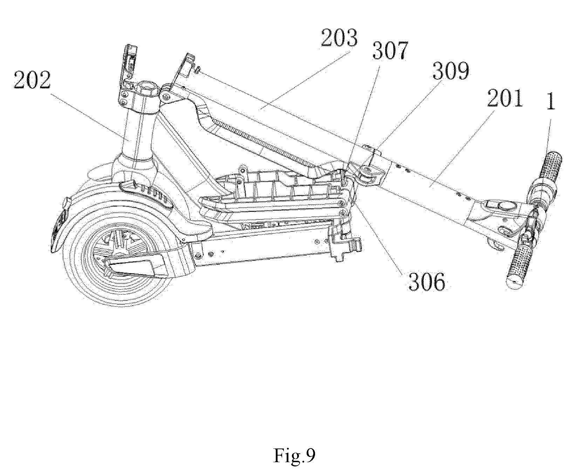

Fig. 9 shows a second folded state: the intermediate connecting part 203 and the wheel connecting part 202 are in a folded state, and the front footboard support 301 and the rear footboard support 302 are in a folded state, so that the user may hold the handlebar assembly 1 to pull the folded electric scooter as the front wheel component 501 and the rear wheel component serve as rolling members, thereby moving the folded electric scooter conveniently.

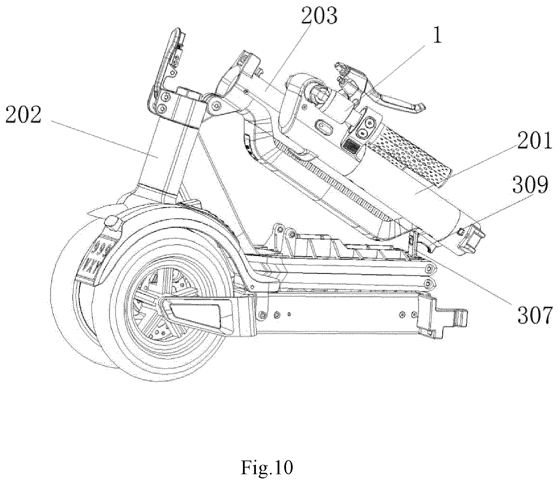

Fig. 10 shows a third folded state: the intermediate connecting part 203 and the wheel connecting part 202 are in a folded state, the front footboard support 301 and the rear footboard support 302 are in a folded state, the handlebar assembly 1 is in a folded state, and the handlebar connecting part 201 and the intermediate connecting part 203 are in a folded state. The folded electric scooter in the folded state hereby occupies a minimum area and forms a triangular structure, achieving a firmly folded structure which is convenient for storage and occupies relatively small space.

In the description herein, it is appreciated that the terms "upper", "lower", "left", "right", etc. orientation or positional relationship are merely utilized to facilitate the description and to simplify the operation, and do not indicate or imply that the device or element being referred to be obligated to have a particular orientation, be constructed and operated in a particular orientation, and therefore not for purposes of any restrictions or limitations on the disclosure. Furthermore, the terms "first", "second", and the like are used merely to distinguish one from another in the description and are not intended to be limiting.

In the description of this specification, the terms "an embodiment", "an example", etc. means that a particular feature, structure, material, or characteristic described in connection with the embodiment or example is included in at least one embodiment or example of the disclosure. In the description, schematic expressions of the above terms do not necessarily refer to the same embodiment or example.

In addition, it should be understood that while the description has been described in terms of embodiments, not every embodiment includes a single technical solution, the description is described for clarity only, and that a person skilled in the art will take the description as a whole, and the solutions in various embodiments may be appropriately combined to form other embodiments as may be appreciated by a person skilled in the art.

The technical principles of the present disclosure have been described above in connection with specific embodiments. These descriptions are merely for purpose of illustrating the principles of the present disclosure and are not for purposes of any restrictions or limitations on the scope of the disclosure. Based on the explanations herein, a person skilled in the art would have been able to conceive other specific embodiments of the present disclosure without any inventive effort, which would all fall within the scope of the present disclosure as defined by the appended claims.

## Claims

1. A foldable electric scooter, it comprises:
a handlebar assembly (1), a steering pole assembly (2), a footboard assembly (3), a driving device (4) and a wheel assembly (5);
wherein the handlebar assembly (1) is connected to one end of the steering pole assembly (2), the wheel assembly (5) comprises a front wheel component (501) provided on the other end of the steering pole assembly (2) and a rear wheel component (502) connected to the footboard assembly (3), and the driving device (4) is employed for driving the wheel assembly (5) to rotate;
wherein the handlebar assembly (1) comprises a handlebar head component (101) and a handle component (102), and a first folding component (103) is provided between the handlebar head component (101) and the handle component (102);
wherein the steering pole assembly (2) comprises a handlebar connecting part (201), a wheel connecting part (202) and an intermediate connecting part (203), a second folding component (204) is provided between the handlebar connecting part (201) and the intermediate connecting part (203), and is also provided between the intermediate connecting part (203) and the wheel connecting part (202);
wherein the footboard assembly (3) comprises a front footboard support (301) and a rear footboard support (302), and a third folding component (303) is provided between the front footboard support (301) and the rear footboard support (302);
wherein the third folding component (303) comprises a front foldable chassis (3031) provided on the front footboard support (301), a rear foldable chassis (3032) provided on the rear footboard support (302) and a locking arrangement; one end of the front foldable chassis (3031) is hinged to an end of the rear foldable chassis (3032), and the other end of the front foldable chassis (3031) is fixed to the rear foldable chassis (3032) by the locking arrangement; and
**characterized in that**, wherein the locking arrangement comprises a footboard locking base (3033), a first locking plate (3034) and a second locking plate (3035); the footboard locking base (3033) and the first locking plate (3034) are hinged to the second locking plate (3035) respectively, the rear foldable chassis (3032) is provided with a recess (3036) fitting with the first locking plate (3034), the second locking plate (3035) is provided with a locking snap-fit component (3037) capable of moving relative to the second locking plate (3035), and the footboard locking base (3033) is provided with a snapping part (3038) that is engaged with the locking snap-fit component (3037) such that the first locking plate (3034) is fastened into the recess (3036).

2. The foldable electric scooter of claim 1, **characterized in that**, the first folding component (103) comprises a first hinged bar (1031) with one end hinged to the handlebar head component (101), and with the other end connected to the handle component (102), and the first hinged bar (1031) is sleeved with a sliding sleeve (1032) capable of sliding relative to the first hinged bar (1031).

3. The foldable electric vehicle of claim 1, **characterized in that**, the second folding component (204) comprises a steering pole folding base (2041) provided on the intermediate connecting part (203), a steering pole folding clasp (2042) provided on the handlebar connecting part (201) and the wheel connecting part (202), and a locking mechanism, a side of the steering pole folding base (2041) is hinged to a side of the steering pole folding clasp (2042), and the locking mechanism is employed for fixing the other side of the steering pole folding base (2041) to the other side of the steering pole folding clasp (2042).

4. The foldable electric scooter of claim 3, **characterized in that**, a folding between the intermediate connecting part (203) and the wheel connecting part (202) is in a direction toward the footboard assembly (3), and a folding between the handlebar connecting part (201) and the intermediate connecting part (203) is in a direction toward a side surface of the front wheel component (501).

5. The foldable electric scooter of claim 1, **characterized in that**, a first elastic member is provided between the locking snap-fit component (3037) and the second locking plate (3035); and the locking snap-fit component (3037) is moved relative to the second locking plate (3035) so as to be separated from the snapping part (3038) and stress the first elastic member to be in a compressed state.

6. The foldable electric scooter of claim 1, **characterized in that**, a limiting member is provided on the front foldable chassis (3031) and is in sliding fit with the front foldable chassis (3031), one end of the limiting member abuts against a hinged joint of the rear foldable chassis (3032) and the front foldable chassis (3031), a limiting hole (310) is formed on the rear foldable chassis (3032), and the rear foldable chassis (3032) and the front foldable chassis (3031) are in an opening state so that the limiting member is accommodated to the limiting hole (310).

7. The foldable electric scooter of claim 6, **characterized in that**, the limiting member comprises a limiting pin (311) slidably arranged in the front foldable chassis (3031), and a limiting sleeve (312) arranged on the front foldable chassis (3031); the limiting pin (311) and the limiting sleeve (312) are in sliding fit and form a limiting groove (313) having a variable space, and a second elastic member (314) is provided in the limiting groove (313).

8. The foldable electric scooter of claim 1, **characterized in that**, the footboard assembly (3) further comprises a front footboard body (304) and a rear footboard body (305); the front footboard body (304) and the rear footboard body (305) are connected in an articulated manner, the front footboard body (304) is connected to the front footboard support (301), and the rear footboard body (305) is positioned correspondingly to the rear footboard support (302).

## Patentansprüche

1. Zusammenklappbarer Elektroscooter, das Folgendes umfasst:
eine Lenkstangenbaugruppe (1), eine Steuerstangenbaugruppe (2), eine Trittbrettbaugruppe (3), eine Antriebsvorrichtung (4) und eine Radbaugruppe (5);
wobei die Lenkstangenbaugruppe (1) mit einem Ende der Steuerstangenbaugruppe (2) verbunden ist, die Radbaugruppe (5) eine Vorderradkomponente (501), die an dem anderen Ende der Steuerstangenbaugruppe (2) bereitgestellt ist, und eine Hinterradkomponente (502), die mit der Trittbrettbaugruppe (3) verbunden ist, umfasst, und die Antriebsvorrichtung (4) verwendet wird, um die Radbaugruppe (5) so anzutreiben, dass sie sich dreht;
wobei die Lenkstangenbaugruppe (1) eine Lenkstangenkopfkomponente (101) und eine Griffkomponente (102) umfasst und eine erste zusammenklappbare Komponente (103) zwischen der Lenkstangenkopfkomponente (101) und der Griffkomponente (102) bereitgestellt ist;
wobei die Steuerstangenbaugruppe (2) ein Lenkstangenverbindungsteil (201), ein Radverbindungsteil (202) und ein Zwischenverbindungsteil (203) umfasst, eine zweite zusammenklappbare Komponente (204) zwischen dem Lenkstangenverbindungsteil (201) und dem Zwischenverbindungsteil (203) bereitgestellt ist und auch zwischen dem Zwischenverbindungsteil (203) und dem Radverbindungsteil (202) bereitgestellt ist;
wobei die Trittbrettbaugruppe (3) eine vordere Trittbrettstütze (301) und eine hintere Trittbrettstütze (302) umfasst und eine dritte zusammenklappbare Komponente (303) zwischen der vorderen Trittbrettstütze (301) und der hinteren Trittbrettstütze (302) bereitgestellt ist;
wobei die dritte zusammenklappbare Komponente (303) ein vorderes zusammenklappbares Chassis (3031), das an der vorderen Trittbrettstütze (301) bereitgestellt ist, ein hinteres zusammenklappbares Chassis (3032), das an der hinteren Trittbrettstütze (302) bereitgestellt ist, und eine Verriegelungsanordnung umfasst; ein Ende des vorderen zusammenklappbaren Chassis (3031) an einem Ende des hinteren zusammenklappbaren Chassis (3032) angelenkt ist und das andere Ende des vorderen zusammenklappbaren Chassis (3031) durch die Verriegelungsanordnung an dem hinteren zusammenklappbaren Chassis (3032) fixiert ist; und
**dadurch gekennzeichnet, dass** die Verriegelungsanordnung eine Trittbrettverriegelungsbasis (3033), eine erste Verriegelungsplatte (3034) und eine zweite Verriegelungsplatte (3035) umfasst; die Trittbrettverriegelungsbasis (3033) und die erste Verriegelungsplatte (3034) jeweils an der zweiten Verriegelungsplatte (3035) angelenkt sind, das hintere zusammenklappbare Chassis (3032) mit einer Aussparung (3036) versehen ist, die zu der ersten Verriegelungsplatte (3034) passt, die zweite Verriegelungsplatte (3035) mit einer Verriegelungsschnappkomponente (3037) versehen ist, die in der Lage ist, sich relativ zu der zweiten Verriegelungsplatte (3035) zu bewegen, und die Trittbrettverriegelungsbasis (3033) mit einem Schnappteil (3038) versehen ist, das mit der Verriegelungsschnappkomponente (3037) so in Eingriff steht, dass die erste Verriegelungsplatte (3034) in der Aussparung (3036) befestigt ist.

2. Zusammenklappbarer Elektroscooter nach Anspruch 1, **dadurch gekennzeichnet, dass** die erste zusammenklappbare Komponente (103) eine erste angelenkte Stange (1031) umfasst, deren eines Ende an der Lenkstangenkopfkomponente (101) angelenkt ist und deren anderes Ende mit der Griffkomponente (102) verbunden ist, und die erste angelenkte Stange (1031) mit einer Gleithülse (1032) ummantelt ist, die in der Lage ist, relativ zu der ersten angelenkten Stange (1031) zu gleiten.

3. Zusammenklappbares Elektrofahrzeug nach Anspruch 1, **dadurch gekennzeichnet, dass** die zweite zusammenklappbare Komponente (204) eine Steuerstangenzusammenklappbasis (2041), die an dem Zwischenverbindungsteil (203) bereitgestellt ist, einen Steuerstangenzusammenklappverschluss (2042), der an dem Lenkstangenverbindungsteil (201) und dem Radverbindungsteil (202) bereitgestellt ist, und einen Verriegelungsmechanismus umfasst, eine Seite der Steuerstangenzusammenklappbasis (2041) an einer Seite des Steuerstangenzusammenklappverschlusses (2042) angelenkt ist und der Verriegelungsmechanismus zum Fixieren der anderen Seite der Steuerstangenzusammenklappbasis (2041) an der anderen Seite des Steuerstangenzusammenklappverschlusses (2042) verwendet wird.

4. Zusammenklappbarer Elektroscooter nach Anspruch 3, **dadurch gekennzeichnet, dass** ein Zusammenklappen zwischen dem Zwischenverbindungsteil (203) und dem Radverbindungsteil (202) in einer Richtung zu der Trittbrettbaugruppe (3) verläuft und ein Zusammenklappen zwischen dem Lenkstangenverbindungsteil (201) und dem Zwischenverbindungsteil (203) in einer Richtung zu einer Seitenfläche der Vorderradkomponente (501) verläuft.

5. Zusammenklappbarer Elektroscooter nach Anspruch 1, **dadurch gekennzeichnet, dass** ein erstes elastisches Element zwischen der Verriegelungsschnappkomponente (3037) und der zweiten Verriegelungsplatte (3035) bereitgestellt ist; und die Verriegelungsschnappkomponente (3037) relativ zu der zweiten Verriegelungsplatte (3035) bewegt wird, um von dem Schnappteil (3038) getrennt zu sein und das erste elastische Element so zu belasten, dass es in einem komprimierten Zustand ist.

6. Zusammenklappbarer Elektroscooter nach Anspruch 1, **dadurch gekennzeichnet, dass** ein Begrenzungselement an dem vorderen zusammenklappbaren Chassis (3031) bereitgestellt ist und sich in Gleitsitz mit dem vorderen zusammenklappbaren Chassis (3031) befindet, ein Ende des Begrenzungselements an einem Gelenk des hinteren zusammenklappbaren Chassis (3032) und des vorderen zusammenklappbaren Chassis (3031) anliegt, ein Begrenzungsloch (310) an dem hinteren zusammenklappbaren Chassis (3032) ausgebildet ist und sich das hintere zusammenklappbare Chassis (3032) und das vordere zusammenklappbare Chassis (3031) in einem Öffnungszustand befinden, so dass das Begrenzungselement an dem Begrenzungsloch (310) aufgenommen ist.

7. Zusammenklappbarer Elektroscooter nach Anspruch 6, **dadurch gekennzeichnet, dass** das Begrenzungselement einen Begrenzungsstift (311), der verschiebbar in dem vorderen zusammenklappbaren Chassis (3031) angeordnet ist, und eine Begrenzungshülse (312), die an dem vorderen zusammenklappbaren Chassis (3031) angeordnet ist, umfasst; der Begrenzungsstift (311) und die Begrenzungshülse (312) sich in Gleitsitz befinden und eine Begrenzungsnut (313) mit einem variablen Raum bilden, und ein zweites elastisches Element (314) in der Begrenzungsnut (313) bereitgestellt ist.

8. Zusammenklappbarer Elektroscooter nach Anspruch 1, **dadurch gekennzeichnet, dass** die Trittbrettbaugruppe (3) ferner einen vorderen Trittbrettkörper (304) und einen hinteren Trittbrettkörper (305) umfasst; der vordere Trittbrettkörper (304) und der hintere Trittbrettkörper (305) gelenkig verbunden sind, der vordere Trittbrettkörper (304) mit der vorderen Trittbrettstütze (301) verbunden ist und der hintere Trittbrettkörper (305) entsprechend der hinteren Trittbrettstütze (302) positioniert ist.

## Revendications

1. Trottinette électrique pliante, elle comprend :
un ensemble guidon (1), un ensemble colonne de direction (2), un ensemble marchepied (3), un dispositif d'entraînement (4) et un ensemble roue (5) ;
ledit ensemble guidon (1) étant relié à une extrémité de l'ensemble colonne de direction (2), ledit ensemble roue (5) comprenant un composant roue avant (501) prévu sur l'autre extrémité de l'ensemble colonne de direction (2) et un composant roue arrière (502) relié à l'ensemble marchepied (3), et ledit dispositif d'entraînement (4) étant utilisé pour entraîner l'ensemble roue (5) en rotation ;
ledit ensemble guidon (1) comprenant un composant tête de guidon (101) et un composant poignée (102), et un premier composant de pliage (103) étant prévu entre le composant tête de guidon (101) et le composant poignée (102) ;
ledit ensemble colonne de direction (2) comprenant une partie de liaison de guidon (201), une partie de liaison de roue (202) et une partie de liaison intermédiaire (203), un deuxième composant de pliage (204) étant prévu entre la partie de liaison de guidon (201) et la partie de liaison intermédiaire (203), et étant également prévu entre la partie de liaison intermédiaire (203) et la partie de liaison de roue (202) ;
ledit ensemble marchepied (3) comprenant un support de marchepied avant (301) et un support de marchepied arrière (302), et un troisième composant de pliage (303) étant prévu entre ledit support de marchepied avant (301) et ledit support de marchepied arrière (302) ;
ledit troisième composant de pliage (303) comprenant un châssis pliant avant (3031) prévu sur le support de marchepied avant (301), un châssis pliant arrière (3032) prévu sur le support de marchepied arrière (302) et un agencement de verrouillage ; une extrémité du châssis pliant avant (3031) étant articulée à une extrémité du châssis pliant arrière (3032), et ladite autre extrémité du châssis pliant avant (3031) étant fixée au châssis pliant arrière (3032) par l'agencement de verrouillage ; et
**caractérisée en ce que**, ledit agencement de verrouillage comprenant une base de verrouillage (3033) de marchepied, une première plaque de verrouillage (3034) et une seconde plaque de verrouillage (3035) ; ladite base de verrouillage (3033) de marchepied et la première plaque de verrouillage (3034) étant articulées à la seconde plaque de verrouillage (3035) respectivement, ledit châssis pliant arrière (3032) étant pourvu d'un évidement (3036) s'ajustant avec la première plaque de verrouillage (3034), ladite seconde plaque de verrouillage (3035) étant pourvue d'un composant d'encliquetage de verrouillage (3037) capable de se déplacer par rapport à la seconde plaque de verrouillage (3035), et ladite base de verrouillage (3033) de marchepied étant pourvue d'une partie d'encliquetage (3038) qui est en prise avec le composant d'encliquetage de verrouillage (3037) de sorte que la première plaque de verrouillage (3034) soit fixée dans l'évidement (3036).

2. Trottinette électrique pliante de la revendication 1, **caractérisée en ce que**, le premier composant de pliage (103) comprend une première barre articulée (1031) avec une extrémité articulée au composant tête de guidon (101), et avec l'autre extrémité reliée au composant poignée (102), et la première barre articulée (1031) est gainée d'un manchon coulissant (1032) capable de coulisser par rapport à la première barre articulée (1031).

3. Véhicule électrique pliant de la revendication 1, **caractérisé en ce que** le deuxième composant de pliage (204) comprend une base de pliage (2041) de colonne de direction prévue sur la partie de liaison intermédiaire (203), un fermoir de pliage (2042) de colonne de direction prévu sur la partie de liaison de guidon (201) et la partie de liaison de roue (202), et un mécanisme de verrouillage, un côté de la base de pliage (2041) de colonne de direction est articulé à un côté du fermoir de pliage (2042) de colonne de direction, et le mécanisme de verrouillage est utilisé pour fixer l'autre côté de la base de pliage (2041) de colonne de direction à l'autre côté du fermoir de pliage (2042) de colonne de direction.

4. Trottinette électrique pliante de la revendication 3, **caractérisée en ce qu'**un pliage entre la partie de liaison intermédiaire (203) et la partie de liaison de roue (202) est dans une direction vers l'ensemble marchepied (3), et un pliage entre la partie de liaison de guidon (201) et la partie de liaison intermédiaire (203) est dans une direction vers une surface latérale du composant roue avant (501).

5. Trottinette électrique pliante de la revendication 1, **caractérisée en ce qu'**un premier élément élastique est prévu entre le composant d'encliquetage de verrouillage (3037) et la seconde plaque de verrouillage (3035) ; et le composant d'encliquetage de verrouillage (3037) est déplacé par rapport à la seconde plaque de verrouillage (3035) de façon à être séparé de la partie d'encliquetage (3038) et à contraindre le premier élément élastique à être dans un état comprimé.

6. Trottinette électrique pliante de la revendication 1, **caractérisée en ce qu'**un élément de limitation est prévu sur le châssis pliant avant (3031) et est en ajustement coulissant avec le châssis pliant avant (3031), une extrémité de l'élément de limitation bute contre un joint articulé du châssis pliant arrière (3032) et du châssis pliant avant (3031), un trou de limitation (310) est formé sur le châssis pliant arrière (3032), et le châssis pliant arrière (3032) et le châssis pliant avant (3031) sont dans un état d'ouverture afin que l'élément de limitation soit reçu dans le trou de limitation (310).

7. Trottinette électrique pliante de la revendication 6, **caractérisée en ce que**, l'élément de limitation comprend une broche de limitation (311) agencée de manière coulissante dans le châssis pliant avant (3031), et un manchon de limitation (312) agencé sur le châssis pliant avant (3031) ; la broche de limitation (311) et le manchon de limitation (312) sont en ajustement coulissant et forment une rainure de limitation (313) possédant un espace variable, et un second élément élastique (314) est prévu dans la rainure de limitation (313).

8. Trottinette électrique pliante de la revendication 1, **caractérisée en ce que**, l'ensemble marchepied (3) comprend en outre un corps de marchepied avant (304) et un corps de marchepied arrière (305) ; le corps de marchepied avant (304) et le corps de marchepied arrière (305) sont reliés de manière articulée, le corps de marchepied avant (304) est relié au support de marchepied avant (301), et le corps de marchepied arrière (305) est positionné de manière correspondante au support de marchepied arrière (302).
